Europäisches Patentamt

European Patent Office

Office européen des brevets

(11) Veröffentlichungsnummer: **0 139 785**
**A2**

# (12) EUROPÄISCHE PATENTANMELDUNG

(21) Anmeldenummer: **83111418.6**

(22) Anmeldetag: **15.11.83**

(51) Int. Cl.⁴: **G 03 B 35/26**

(30) Priorität: **03.10.83 DE 3335847**

(43) Veröffentlichungstag der Anmeldung:
**08.05.85 Patentblatt 85/19**

(84) Benannte Vertragsstaaten:
**AT BE CH DE FR GB IT LI LU NL SE**

(71) Anmelder: **REFEKA Werbemittel GmbH
Am Werbering 1
D-8011 Kirchheim bei München(DE)**

(72) Erfinder: **Nordmeier, Manfred
Karwendelstrasse 63
D-8019 Ebersberg(DE)**

(74) Vertreter: **Strohschänk, Heinz, Dipl.-Ing.
Musäusstrasse 5
D-8000 München 60(DE)**

(54) **Verfahren zum Herstellen eines durch eine Farbfilterbrille stereoskopisch betrachtbaren Buntdruckes.**

(57) Ein bekanntes Verfahren zum Herstellen eines durch eine Farbfilterbrille stereoskopisch betrachtbaren Buntdruckes von zwei das Objekt in stereoskopischer Zuordnung darstellenden farbigen Diapositiven aus, von denen durch unterschiedliche Farbfilterung Halbtonnegative sowie durch eine anschließende Rasterung gerasterte Farbauszüge sowie von diesen her den beiden Diapositiven zugeordnete Druckplatten oder Druckwalzen für einen konventionellen Buntdruck auf einen geeigneten Bildträger hergestellt werden, wird dadurch sowohl hinsichtlich der Bildqualität des stereoskopisch betrachteten Buntdruckes als auch schon hinsichtlich der Bildqualität des mit bloßem Auge betrachteten Buntdruckes wesentlich verbessert, daß das Verfahren gemäß der Lehre des kennzeichnenden Teils des Patentanspruchs 1 durchgeführt wird.

EP 0 139 785 A2

./...

## Verfahren zum Herstellen eines durch eine Farbfilterbrille stereoskopisch betracht- baren Buntdruckes

Die Erfindung bezieht sich auf ein Verfahren zum Herstellen eines durch eine Farbfilterbrille stereoskopisch betrachtbaren Buntdruckes gemäß der Gattung des Patentanspruchs 1.

Bei einem der vorgenannten Gattung entsprechenden, durch die DE-OS 28 06 224 offenbarten Farbbildverfahren kann zwar ein durch eine Farbfilterbrille stereoskopisch betrachtbares Buntbild erzeugt werden; der Bildträger vermittelt aber bei direkter Betrachtung ohne angepaßte augenverschiedene Farbfilterung kein Bild. Bei einem weiteren, nach seinem Erfinder als Malifaud-Verfahren bekanntgewordenen Verfahren wird zwar ein mit bloßem Auge als Buntdruck erkennbarer Buntdruck erzielt; abgesehen davon, daß dem Betrachter ohne Verwendung der Farbfilterbrille infolge der sich nicht deckenden unterschiedlichen Farben nur ein schlecht erkennbares Farbbild vermittelt wird, wird selbst bei Verwendung einer geeigneten Farbfilterbrille nur ein farblich mangelhaftes stereoskopisches Farbbild erkennbar. Nachteilig ist bei dem letztgenannten Verfahren auch noch, daß für den eigentlichen Druck für jede der beiden ursprünglichen Aufnahmen eine eigene Gruppe den Farbauszügen entsprechender Druckplatten erforderlich ist und damit das ganze Druckverfahren aufwendig und teuer wird.

Der Erfindung liegt die Aufgabe zugrunde, das letztgenannte Verfahren so zu vervollkommnen, daß einerseits mit Verwendung einer geeigneten Farbfilterbrille ein in seinen Farbwerten naturgetreues und scharf konturiertes Farbbild stereoskopisch und anderseits auch schon ohne Verwendung einer Brille ein farblich naturgetreues nicht stereoskopisches Bild gesehen werden kann. Dabei ist überdies angestrebt, das gattungsgemäße Verfahren so zu vereinfachen, daß für den eigentlichen Buntdruck nicht mehr Druckplatten bzw. Druckwalzen als für einen konventionellen, nicht stereoskopisch betrachtbaren Buntdruck benötigt werden.

Die gestellte Aufgabe ist erfindungsgemäß durch die im kennzeichnenden Teil des Patentanspruchs 1 wiedergegebenen Merkmale gelöst.

Ein solches Verfahren erlaubt es nicht nur, den Buntdruck selbst in konventioneller Weise von je Farbe lediglich einer Druckplatte bzw. Druckwalze her zu drucken, sondern es ergeben sich darüber hinaus bei Betrachtung durch die vorgeschlagene Farbfilterbrille auch üblichen nicht stereoskopischen Farbdrucken in der ausgewogenen Farbwirkung nahezu gleichwertige stereoskopische Bilder. Es ergibt sich auch noch der weitere Vorteil, daß die gedruckten Farbbilder bei Betrachtung mit bloßem Auge, d.h. ohne die vorgeschlagene Farbfilterbrille, in den Farbwerten ausgewogene und überdies im Brennpunktbereich scharf konturierte Darstellungen zeigen, die von nicht stereoskopischen Farbbildern kaum unterscheidbar sind.

In den Patentansprüchen 2 bis 4 sind bevorzugte Ausgestaltungen der Erfindung gekennzeichnet, durch deren Anwendung auch einem qualitativ sehr hochwertigen vierfarbigen, nicht stereoskopischen Farbdruck entsprechende satte Farbwerte in gleicher Weise bei dem erfindungsgemäßen stereoskopisch betrachtbaren Farbdruck erzielt werden.

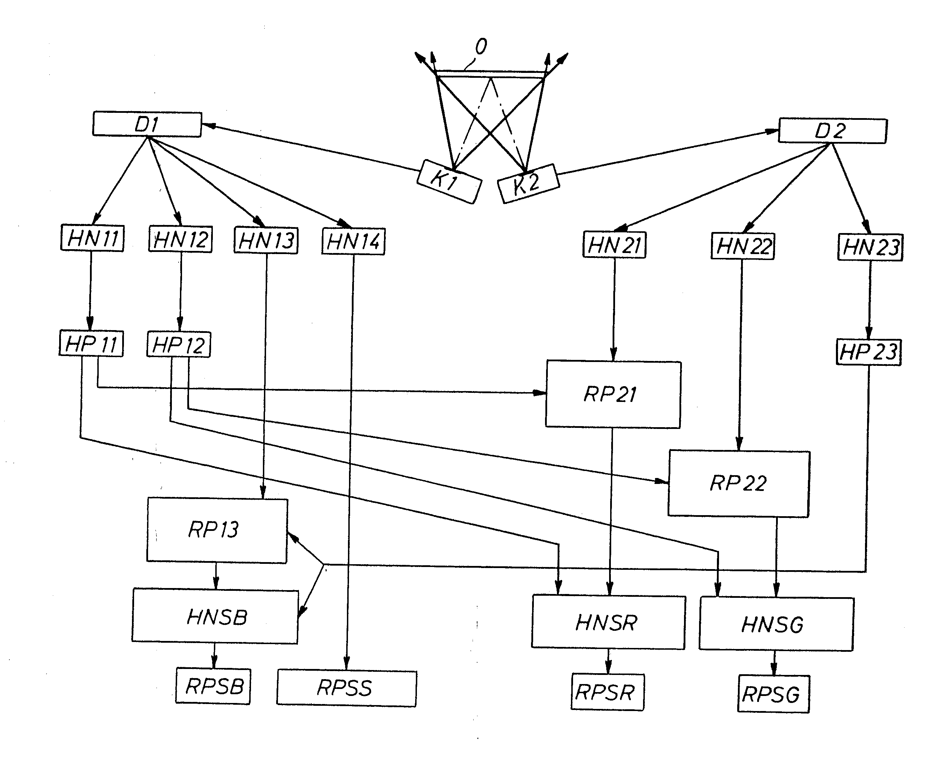

In der Zeichnung ist eine Ausführungsform des erfindungsgemäßen Verfahrens anhand einer Schemadarstellung veranschaulicht.

Ein in der Zeichnung schematisch veranschaulichtes Objekt
O wird von zwei in stereoskopischer Zuordnung angeordneten
Kameras K1 und K2 auf je einen Diapositiv-Film aufgenommen,
wonach von den letzteren je ein das Objekt O vollständig farbig wiedergebendes Diapositiv D1, D2 hergestellt wird. Vom
Diapositiv D1 werden durch Farbfilterzerlegung den Farben
rot, gelb, blau und schwarz entsprechende Halbtonnegative
HN11, HN12, HN13 und HN14 hergestellt, während vom Diapositiv D2 ebenfalls durch Farbfilterzerlegung den Farben rot,
gelb und blau entsprechende Halbtonnegative HN21, HN22 und
HN23 hergestellt werden.

Gemäß dem Ausführungsbeispiel werden von den beiden Halbtonnegativen HN11 und HN12 jeweils im Kontakt entsprechende
Halbtonpositive HP11 und HP12 sowie vom Halbtonnegativ HN23
ebenfalls im Kontakt ein Halbtonpositiv HP23 hergestellt. Anschließend wird von jedem dieser Halbtonpositive im Kontakt
mit dem zugeordneten Halbtonnegativ HN21, HN22 und HN13 des
jeweils anderen Diapositivs D2 bzw. D1 ein Positiv hergestellt, welches aufgrund dieser Zuordnung im Brennpunktbereich klar durchsichtig ist, jedoch die Randbereiche des jeweils zugeordneten Halbtonnegativs HN21, HN22 und HN13 wiedergibt. Die so hergestellten Positive bilden also jeweils
ein Restpositiv und sind in der Zeichnung jeweils als RP21,
RP22 und RP13 bezeichnet.

Weiterhin wird von diesen Restpositiven RP21, RP22 und
RP13 jeweils im Kontakt mit dem in der Farbe zugeordneten
vorgenannten Halbtonpositiv HP11 bzw. HP12 und HP23 ein
Halbtonnegativ hergestellt, mit welchem die stereoskopische
Betrachtungsmöglichkeit des schließlich zu erzeugenden Bunt-

0139785

druckes geschaffen ist. Entsprechend den drei Farben rot, gelb und blau der verwendeten Farbauszüge sind diese Halbtonnegative in der Zeichnung mit HNSR, HNSG und HNSB bezeichnet. Die letzteren und außerdem das Halbtonnegativ HN14 werden anschließend in üblicher, nicht veranschaulichter Weise gerastert, woraufhin von ihnen in konventioneller Weise je eine der zugeordneten Farbe entsprechende Druckplatte hergestellt wird. In der Zeichnung sind diese vier gerasterten Druckplatten mit RPSR, RPSG, RPSB und RPSS bezeichnet. Von diesen Druckplatten wird dann schließlich der Buntdruck in ebenfalls konventioneller, in der Zeichnung nicht dargestellter Weise auf ein und denselben Bildträger, in der Regel ein geeignetes Papierblatt, übereinander gedruckt, wodurch sich ein Buntdruck ergibt, der bereits mit bloßem Auge betrachtet werden kann und sich bei einer solchen Betrachtung kaum von einem bisher üblichen, nicht stereoskopisch betrachtbaren Buntdruck unterscheidet und insbesondere auch in seinen Farbwerten gut ausgewogen ist. Der Buntdruck zeigt im übrigen schon bei Betrachtung mit bloßem Auge im Brennpunktbereich scharf konturierte Darstellungen, die lediglich nach den Randbereichen des Bildes hin geringfügig verschwommen werden.

Wird der hergestellte Buntdruck jedoch mit einer Farbfilterbrille betrachtet, die einerseits eine rote Acetatfolie aus ca. 80% rot, ca. 15% gelb und ca. 5% blau und anderseits eine grüne Folie aus ca. 50% blau, ca. 45% gelb und ca. 5% rot aufweist, dann sieht der Betrachter die Darstellung des Buntdruckes über die ganze Bildfläche gestochen scharf und in gut ausgewogenen satten Farbwerten stereoskopisch.

Wenn das mit dem vorstehenden Ausführungsbeispiel beschriebene Verfahren auch besonders gute Ergebnisse - sowohl bei stereoskopischer Betrachtung als auch bei Betrachtung mit bloßem Auge - ermöglicht, kann das Verfahren ohne eine nennenswerte Beeinträchtigung des Ergebnisses auch in der nachstehend erläuterten Weise abgewandelt und gewünschtenfalls vereinfacht werden:

1. Es kann auf die Herstellung eines der Farbe schwarz zugeordneten Halbtonnegativs und somit auch auf die Herstellung einer zugeordneten Rasterplatte verzichtet werden, was statt zu einem Vierfarbdruck zu einem etwas einfacheren Dreifarbdruck führt.

2. Die vom einen Diapositiv hergestellten beiden Halbtonpositive können statt aus den Farben rot und gelb zugeordneten Halbtonnegativen auch aus den Farben gelb und blau zugeordneten Halbtonnegativen hergestellt und anschließend in Verbindung mit den Halbtonnegativen gelb und blau des anderen Diapositivs zur Herstellung entsprechender Restpositive verwendet werden, wobei natürlich vom anderen Diapositiv ein der Farbe rot zugeordnetes Halbtonpositiv hergestellt und gemeinsam mit einem Halbtonnegativ gleicher Farbzuordnung des ersten Diapositivs zur Herstellung des entsprechenden Restpositivs verwendet wird.

3. Das der Farbe schwarz zugeordnete Halbtonnegativ kann unabhängig von der gemäß vorstehendem unterschiedlich möglichen Zuordnung und Weiterverwendung der Halbtonpositive statt vom ersten auch vom zweiten Diapositiv hergestellt werden.

4. Es ist schließlich auch möglich, zur Herstellung der beiden Diapositive statt der im Ausführungsbeispiel genannten beiden Kameras K1 und K2 eine einzige handelsübliche Stereokamera zu verwenden, wenn darauf verzichtet werden kann, die Bildachsen beider Aufnahmeobjekte der Kamera auf einen gemeinsamen Mittelpunkt des aufzunehmenden Objektes auszurichten.

5. Während die vorgenannten Farbanteile der zur Betrachtung

0139785

eines erfindungsgemäßen Buntdruckes vorgeschlagenen Farbfilterbrille zur Erzielung einer optimalen Wirkung in
einem Toleranzbereich von $\pm$ 5% des angegebenen Farbanteils
eingehalten werden sollten, werden vorteilhafte Ergebnisse auch noch dann erzielt, wenn dieser Toleranzbereich bis
auf etwa $\pm$ 10% erweitert wird.

Patentansprüche

1. Verfahren zum Herstellen eines durch eine Farbfilterbrille stereoskopisch betrachtbaren Buntdruckes von zwei
das Objekt in stereoskopischer Zuordnung darstellenden farbigen Diapositiven aus, von denen durch unterschiedliche
Farbfilterung Halbtonnegative sowie durch eine anschließende Rasterung gerasterte Farbauszüge sowie von diesen her
den beiden Diapositiven zugeordnete Druckplatten oder Druckwalzen für einen konventionellen Buntdruck auf einen geeigneten Bildträger hergestellt werden, d a d u r c h   g e -
k e n n z e i c h n e t ,   daß von den beiden das Objekt
vollständig farbig wiedergebenden Diapositiven (D1 und D2)
durch Farbfilterzerlegung den Farben rot, gelb und blau entsprechende Halbtonnegative (HN11 bis HN13 und HN21 bis HN23)
und von zwei vom einen Diapositiv (z.B. D1) hergestellten,
zwei in der Farbskala benachbarten Farben zugeordneten Halbtonnegativen (z.B. HN11 und HN12) sowie von dem der dritten
Farbe zugeordneten, vom anderen Diapositiv (D2) hergestellten
Halbtonnegativ (HN23) jeweils im Kontakt ein entsprechendes
Halbtonpositiv (HP11, HP12 und HP23) sowie von jedem dieser
Halbtonpositive im Kontakt mit dem zugeordneten Halbtonnegativ (HN21, HN22 und HN13) des anderen Diapositivs (D2 bzw.
D1) ein im Brennpunktbereich klar durchsichtiges, aber die
Randbereiche des letztgenannten Halbtonnegativs (HN21, HN22
und HN13) wiedergebendes Restpositiv (RP21, RP22 und RP13)
hergestellt wird, von dem im Kontakt mit dem in der Farbe
(rot, gelb und blau)zugeordneten vorgenannten Halbtonpositiv (HP11, HP12 und HP23) ein die stereoskopische Betrachtungsmöglichkeit des zu erzeugenden Buntdruckes schaffendes Halbtonnegativ (HNSR, HNSG und HNSB) hergestellt wird, daß die letzteren Halbtonnegative (HNSR, HNSG und HNSB) anschließend gerastert werden und von ihnen in konventioneller Weise je eine der zugeordneten Farbe entsprechende Druckplatte oder Druckwalze hergestellt wird, daß von den letzteren aufeinanderfolgend der Buntdruck in ebenfalls konventioneller Weise auf ein und denselben Bildträger übereinander gedruckt und zur Betrachtung des so hergestellten Buntdruckes eine Gläser aus je einer roten und grünen Acetatfolie aufweisende Farbfilterbrille mit einer roten Folie aus ca. 80% rot, ca. 15% gelb und ca. 5% blau und einer grünen Folie aus ca. 50% blau, ca. 45% gelb und ca. 5% rot verwendet wird.

2. Verfahren nach Anspruch 1, dadurch gekennzeichnet, daß die vom einen Diapositiv (D1) über entsprechende Halbtonnegative (HN11 und HN12) hergestellten Halbtonpositive (HP11 und HP12) den Farben rot und gelb zugeordnet werden.

3. Verfahren nach Anspruch 1 oder 2, dadurch gekennzeichnet, daß außerdem von einem (z.B. D1) der beiden Diapositive (D1, D2) noch ein schwarzer Farbauszug als Halbtonnegativ (HN14) und von diesem unmittelbar eine für einen Schwarzdruck bestimmte Druckplatte bzw. Druckwalze hergestellt und der Bildträger zusätzlich von dieser her bedruckt wird.

4. Verfahren nach den Ansprüchen 2 und 3, dadurch gekennzeichnet, daß das den schwarzen Farbauszug bildende Halbtonnegativ (HN14) vom selben Diapositiv (D1) hergestellt wird, von dem die roten und gelben Halbtonpositive (HP11 und HP12) hergestellt werden.